# EUROPEAN PATENT SPECIFICATION

(11) **EP 2 219 946 B1**
(45) Date of publication and mention of the grant of the patent: **21.09.2011**
(21) Application number: 07874271.5
(22) Date of filing: 13.11.2007
(51) Int. Cl.: B64D 13/02, B64D 13/06

(54) **CABIN AIR AND HEAT EXCHANGER RAM AIR INLETS FOR AIRCRAFT ENVIRONMENTAL CONTROL SYSTEMS, AND ASSOCIATED METHOD OF USE**
KABINENLUFT- UND WÄRMETAUSCHERSTAULUFTEINLÄSSE FÜR FLUGZEUGKLIMAREGELUNGSANLAGEN UND ZUGEORDNETES VERWENDUNGSVERFAHREN
ENTRÉES D'AIR DYNAMIQUES D'ÉCHANGEUR DE CHALEUR ET AIR DE CABINE POUR SYSTÈMES DE CONDITIONNEMENT D'AIR D'AÉRONEFS, ET PROCÉDÉS D'UTILISATION ASSOCIÉS

(43) Date of publication of application: 25.08.2010
(73) Proprietor: The Boeing Company, Chicago, IL 60606-2016 (US)
(72) Inventor: PARIKH, Pradip G., Renton Washington 98058 (US)
(74) Representative: Howson, Richard G.B.
(86) International application number: PCT/US2007/084550
(87) International publication number: WO 2009/064288

(56) References cited:
- WO-A-2005/063564
- GB-A- 768 975
- US-A- 5 709 103
- US-A1- 2002 152 765
- US-A1- 2004 014 419
- US-A1- 2007 113 579

## Description

### TECHNICAL FIELD

The following disclosure relates generally to aircraft environmental control systems and, more particularly, to aircraft environmental control system air inlets and air outlet.

### BACKGROUND

Commercial airlines and other conventional aircraft typically include environmental control systems that provide conditioned air for the passengers and crew and for other purposes. Conventional environmental control systems (ECSs) use air that is "bled" off the compressor of each jet engine upstream of the combustor. The temperature and pressure of this "bleed air" can vary widely depending on the thrust setting of the engine. For this reason, ECS typically include one or more heat exchangers, compressors, and/or turbines to adjust the temperature and pressure of the air before it flows into the cabin.

Using engine bleed air for cabin air conditioning can reduce engine fusel efficiency. To avoid this result, some newer aircraft (such as the Boeing 787 aircraft) have "more electric" air conditioning systems that use outside air from ram air inlets. Such systems, however, typically require at least two separate ram air inlets for each air conditioning pack. The first ram air inlet provides air to electric-motor-driven cabin air compressors, which supply high pressure air to the air conditioning pack. The second ram air inlet provides cooling air to the air conditioning pack heat exchanger. While having a dedicated high pressure recovery ram air inlet for the cabin air compressors can reduce the power requirements of compressors, the additional inlet adds drag, weight, cost and complexity to the aircraft which can offset gains in fuel efficiency.

US Patent Application Publication US 2002/0152765 A1 describes a ram air duct for an aeroplane air conditioning system, having an inlet channel which can be closed by an inlet valve and an outlet passage closable by an outlet valve, the outlet passage divided into a blower outlet passage and a bypass passage, wherein the outlet valve only closes the bypass passage in the closed inlet state.

International patent publication WO 2005/063564 A2 describes an outlet air guiding flap of an aircraft ram air system wherein one surface of the flap faces an air duct and is exposed to a prevailing pressure in the air duct, and whose opposite surface is exposed to the pressure of air flowing past the aircraft, the system comprising an actuator and control system which controls the position of the outlet air guiding flap so that the difference between the pressures, i.e. the force impinging on the actuator at any one time is essentially zero.

### SUMMARY

The following summary is provided for the benefit of the reader only, and is not intended to limit the invention as set forth by the claims in any way.

In a first aspect of the invention there is provided an environmental control system (ECS) for use with an aircraft as defined in claim 1 of the appended claims. In a second aspect of the invention there is proved a method of operating an ECS on an aircraft In flight, as defined in claim 8.

Various embodiments of the invention are directed generally toward aircraft environmental control systems (ECSs) having combined cabin air and heat exchanger ram air inlets. An ECS configured in accordance with one embodiment of the invention includes a ram air inlet that provides a first portion of air to an air conditioning pack and a second portion of air to an associated heat exchanger. The first portion of air from the ram air inlet flows from the air conditioning pack and through the heat exchanger before flowing into a cabin of the aircraft. The second portion of air from the ram air inlet cools the first portion of air in the heat exchanger, before exiting the aircraft through a ram air outlet.

An aircraft can include an ECS according to an embodiment that provides air to an aircraft cabin. In this embodiment, the ECS includes a ram air inlet having a variable inlet opening in flow communication with an inlet duct, and a ram air outlet having a variable outlet opening in flow communication with an exhaust duct. In other embodiments the ECS can further include an air conditioning pack that receives a first portion of air from the inlet duct, and a heat exchanger that receives the second portion of air from the inlet duct. The first portion of air flows from the air conditioning pack and through the heat exchanger before flowing into the aircraft cabin. The second portion of air flows through the heat exchanger to cool the first portion of air before flowing out the ram air outlet via the exhaust duct. In addition to the foregoing elements, the ECS further includes a controller operably coupled to the ram air inlet and ram air outlet. The controller modulates the variable inlet opening and the variable outlet opening on a specific schedule during operation of the ECS to reduce the aerodynamic drag associated with the ECS ram system and increase the air pressure recovery in the inlet duct.

A method for providing air to an aircraft cabin in accordance with a further embodiment of the invention includes receiving a flow of outside air via an air inlet, and can include splitting the flow of outside air into a first air flow portion and a second air flow portion. The method can further include cooling the first air flow portion with the second air flow portion after compressing the first air flow portion, and directing the first air flow portion into the aircraft cabin after it has been cooled with the second air flow portion.

### BRIEF DESCRIPTION OF THE DRAWINGS

Figure 1 is a schematic diagram of an aircraft environmental control system architecture configured in accordance with an embodiment of the disclosure.
Figure 2 is a schematic diagram of an aircraft environmental control system architecture configured in accordance with another embodiment of the disclosure.
Figure 3 is a bottom isometric view of an aircraft having an environmental control system with a ram air inlet and a ram air outlet configured in accordance with an embodiment of the disclosure.
Figures 4A-4C are cross-sectional views of a portion of the aircraft of Figure 3, illustrating a ram air inlet door configured in accordance with an embodiment of the disclosure.
Figures 5A and 5B are bottom isometric views of ram air outlets configured in accordance with various embodiments of the disclosure.
Figure 6A is a graph illustrating inlet pressure recovery factor versus mass flow for an aircraft environmental control system inlet duct in accordance with an embodiment of the disclosure, and Figure 6B is a graph illustrating aerodynamic drag of a ram air inlet system versus mass flow in accordance with another embodiment of the disclosure.
Figure 7A is a graph illustrating a relationship between a ram air inlet opening and a ram air outlet opening in accordance with an embodiment of the disclosure, and Figure 7B is a graph illustrating air mass flow as a function of the inlet/exit relationship of Figure 7A in accordance with another embodiment of the disclosure.
Figures 8A-8C illustrate air pressure recovery factors at cabin air compressor inlets, cabin air compressor power requirements, and environmental control system drag at various flight conditions in accordance with embodiments of the disclosure.
Figure 9 is a flow diagram of a routine for modulating an environmental control system ram air inlet and/or an associated ram air outlet in accordance with an embodiment of the disclosure.

### DETAILED DESCRIPTION

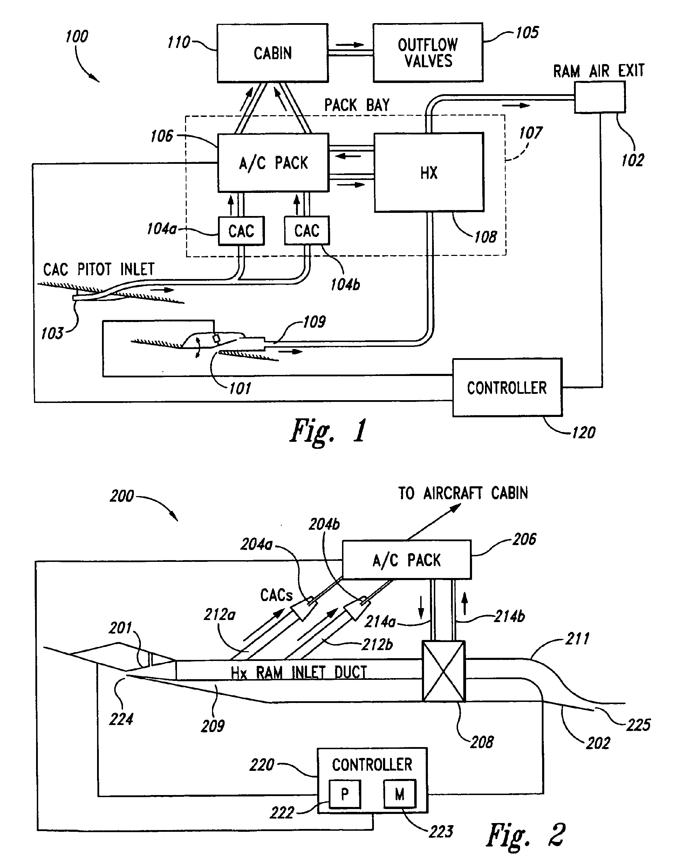

The following disclosure describes aircraft environmental control systems and associated methods of use. In one embodiment, an aircraft environmental control system (aircraft "ECS") includes a modulated ram air inlet that provides air to both a cabin air conditioning system and the air conditioning system heat exchanger. Certain details are set forth in the following description and in Figures 1-9 to provide a thorough understanding of various embodiments of the disclosure. Other details describing well-known structures and systems often associated with aircraft, aircraft ram air inlets, and aircraft ECSs, for example, are not set forth in the following disclosure to avoid unnecessarily obscuring the description of various embodiments of the disclosure.

Many of the details, dimensions, angles and other features shown in the Figures are merely illustrative of particular embodiments of the disclosure. Accordingly, other embodiments can have other details, dimensions, angles and features without departing from the scope of the present disclosure. In addition, further embodiments of the disclosure can be practiced without several of the details described below.

In the Figures, identical reference numbers identify identical, or at least generally similar, elements. To facilitate the discussion of any particular element, the most significant digit or digits of any reference number refer to the Figure in which that element is first introduced. For example, element 201 is first introduced and discussed with reference to Figure 2.

Figure 1 illustrates an aircraft ECS architecture 100 that receives outside air from a first ram air inlet 101 and a second ram air inlet 103. The first ram air inlet 101 can be a flush ram air inlet, and the second ram air inlet 103 can be a pitot-type ram air inlet. The ram air inlets 101 and 103 can be located in wing-body fairings on each side of the aircraft. In the illustrated embodiment, the second ram air inlet 103 provides high pressure air to a first cabin air compressor 104a and a second cabin air compressor 104b. The cabin air compressors 104 supply high pressure air to an air conditioning pack 106. The first ram air inlet 101 provides cooling air to an air conditioning pack heat exchanger 108. The air conditioning pack 106, the heat exchanger 108, and the cabin air compressors 104 can be carried in an air conditioning pack bay 107.

In operation, the second ram air inlet 103 provides high pressure air to the cabin air compressors 104. The cabin air compressors 104 compress the air before flowing it to the air conditioning pack 106. The air conditioning pack 106 can include air compressors, air expanders, air cycle machines, vapor cycle devices, and/or other air conditioning equipment known in the art for conditioning air. The air conditioning pack 106 conditions the air and directs it through the heat exchanger 108. The ram air from the first inlet 101 flows through the heat exchanger 108 to cool the air from the air conditioning pack 106. After passing through the heat exchanger 108, the air from the air conditioning pack 106 flows into an aircraft cabin 110. At least a portion of the air flowing through the cabin 110 is discharged via outflow valves 105. After flowing through the heat exchanger 108, the cooling air from the first ram air inlet 101 exits the aircraft via a ram air outlet 102.

In one embodiment, the first ram air inlet 101 can include a modulated inlet door, such as the modulated inlet door described in detail in pending U.S. Patent Application No. 11/599,245, and the ram air outlet 102 can include a variable opening. In this embodiment, the ECS architecture 100 can further include a controller 120 that is operably connected to the air conditioning pack 106, the first ram air inlet 101, and the ram air outlet 102. In operation, the controller 120 can automatically modulate the first ram air inlet 101 and/or the ram air outlet 102 to optimize or at least improve the air pressure recovery in an associated inlet duct 109. In addition or alternatively, the controller 120 can also modulate the first ram air inlet 101 and/or the ram air outlet 102 to reduce aerodynamic drag from the ECS ram system during flight.

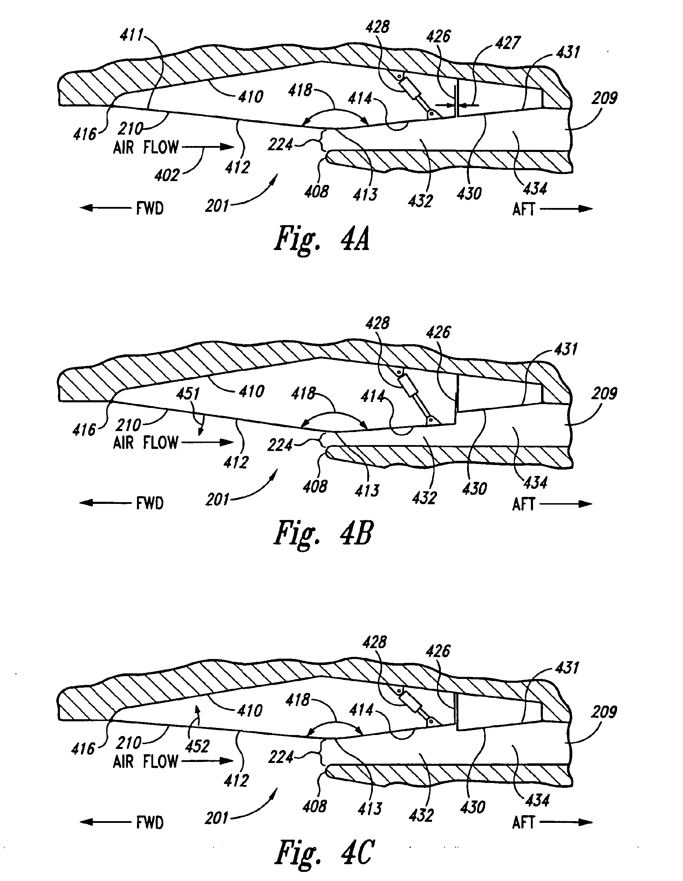

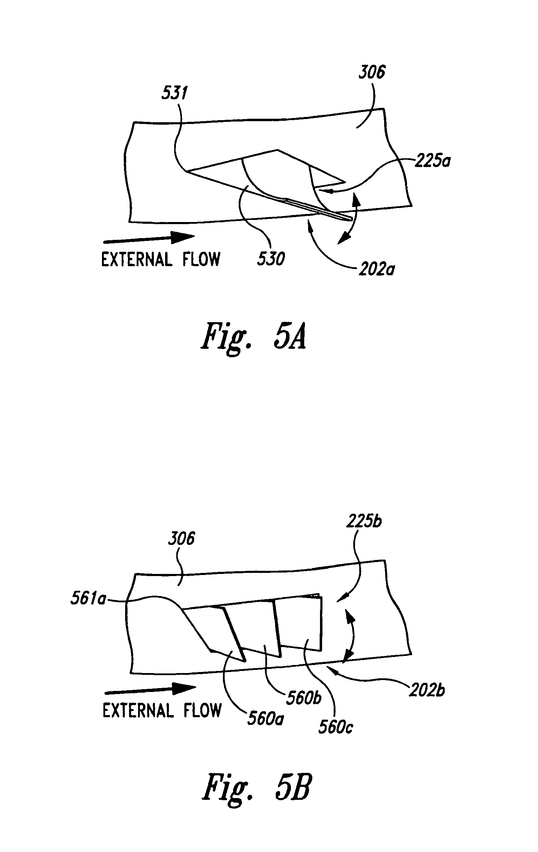

Figure 2 is a schematic diagram of an aircraft ECS architecture 200 configured in accordance with another embodiment of the disclosure. In this embodiment, the ECS architecture 200 includes a single ram air inlet 201 that provides outside air to both a heat exchanger 208 and to first and second cabin air compressor 204a and 204b. The ram air inlet 201 can include a modulated flush inlet having a variable inlet opening 224, such as the modulated inlet door described in detail in pending U.S. Patent Application No. 11/599,245 (see Figures 4A-4C and associated discussion). The incoming air flows from a common inlet duct 209 to the first cabin air compressor 204a via a first air passage 212a, and to the second cabin air compressor 204b via a second air passage 212b, after the flow has slowed to Mach numbers in the range of about 0.1 to about 0.2 through a diffuser area enlargement associated with the ram air inlet 201. The cabin air compressors 204 compress the inlet air before it flows into an air conditioning pack 206. The air conditioning pack 206 can include air cycle machines, vapor cycle devices, and/or other air conditioning equipment known in the art for conditioning the air before it flows into the cabin of the aircraft. As part of the air conditioning, the air flows from the air conditioning pack 206 through the heat exchanger 208 via a third air passage 214a and a fourth air passage 214b. The air flowing from the inlet duct 209 through the heat exchanger 208 is exhausted through an air outlet 202. The ram air outlet 202 can include a modulated outlet with a variable outlet opening 225 (see Figures 5A and 5B and associated discussion).

In another aspect of this embodiment, the environmental control system 200 can include a controller 220 operably connected to the ECS pack 206, the air inlet 201 and the air outlet 202. The controller 220 can include a processor 222 that executes computer-readable instructions stored on memory 223. The computer-readable instructions can cause the controller 220 to modulate the variable inlet opening associated with the air inlet 201 and the variable outlet opening associated with the air outlet 202 to achieve relatively high pressure recovery factors in the inlet duct 209, while simultaneously reducing the aerodynamic drag of the ram system as compared to, for example, the two ram air inlet system described above with reference to Figure 1.

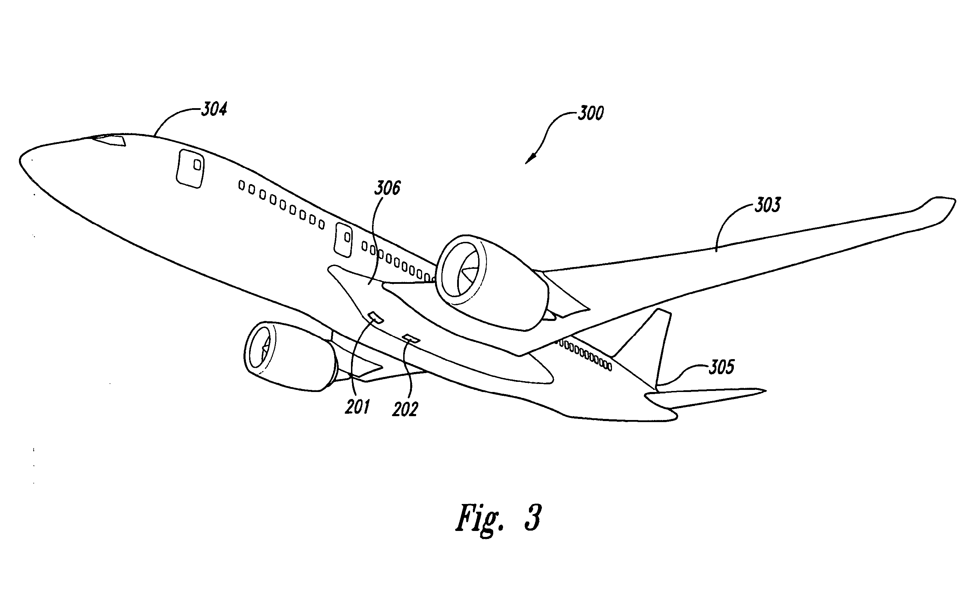

Figure 3 is a bottom isometric view of an aircraft 300 showing the ram air inlet 201 and the ram air outlet 202 of Figure 2, in accordance with one embodiment of the disclosure. In this particular embodiment, the ram air inlet 201 is positioned on the underside of a wing-to-body fairing 306, and the ram air outlet 202 is positioned aft of the ram air inlet 201. In other embodiments, the ram air inlet 201 and/or the ram air outlet 202 can be located on other portions of the aircraft 300. For example, the ram air inlet 201 can be positioned in a positive pressure region of a fuselage 304, or in a similar region of a wing 303 or empennage 305. Although only one ram air inlet and one ram air outlet are shown in Figure 3, the aircraft 300 can also include a similar ram air inlet/outlet combination on the other side of the fuselage 304.

Figures 4A-4C are a series of cross-sectional side views of one embodiment of the ram air inlet 201 in various stages of operation. Referring first to Figure 4A, the ram air inlet 201 includes an inlet housing 410 spaced apart from an inlet lip 408. A hinge 416 pivotally attaches a ram air inlet door 210 to the inlet housing 410. In this embodiment, the ram air inlet door 210 ("inlet door 210") is a "1-piece° door having a first surface portion 412 moveably positioned at least approximately forward or upstream of the inlet lip 408, a second surface portion 414 moveably positioned at least approximately aft or downstream of the inlet lip 408, and a transition region 413 spaced apart from the inlet lip 408 to form the variable "throat" or inlet opening 224 therebetween. The transition region 413 forms an angle 418 between the first surface portion 412 and the second surface portion 414. The angle 418 can be from about 130 degrees to about 178 degrees. For example, in one embodiment, the angle 418 can be from about 150 degrees to about 175 degrees. In another embodiment, the angle 418 can be from about 160 degrees to about 170 degrees. The inlet door 210 of this embodiment also includes a third surface portion 426 attached to an aft region of the second surface portion 414 and extending away from the second surface portion 414 toward the inlet housing 410.

Although the transition region 413 of the illustrated embodiment can at least approximate an edge where the first surface portion 412 and the second surface portion 414 meet, in other embodiments, the transition region 413 can include a more rounded or smoother transition region between these two surface portions. Thus, the transition region 413 will be understood to include sharp edges, rounded or curved transition regions, and/or other regions that can transition between the first surface portion 412 and the second surface portion 414. In addition, the term "inlet housing" is used herein for ease of reference only, and refers generally to the structure that receives and/or supports the inlet door 210. In this regard, the inlet housing 410 can include an enclosure but is not limited to an enclosure. Accordingly, in other embodiments, the inlet housing 410 can include other, more open arrangements of support structures.

In operation, ram air 402 flows through the inlet opening 224 and into a variable diffuser passage 432 formed by the second surface portion 414 and the opposing surface of the inlet lip 408. The ram air flows from the variable diffuser passage 432 into a fixed diffuser passage 434, before flowing into the inlet duct 209. The fixed diffuser passage 434 is formed by a fixed diffuser 431 having a fixed diffuser surface 430. As described in greater detail below, in operation, the second surface portion 414 of the inlet door 210 is optionally positionable in alignment with the fixed diffuser surface 430, as shown in Figure 4A.

An actuator 428 is operably coupled between the inlet housing 410 and the inlet door 210. In one embodiment, the actuator 428 can be electrically driven. In other embodiments, however, the actuator 428 can utilize other types of power including, for example, hydraulic, pneumatic, and/or mechanical power. In this particular embodiment, the actuator 428 is pivotally attached to the second surface portion 414 of the inlet door 210 for direct actuation of the inlet door 210. In other embodiments, however, the actuator 428, and/or one or more other actuators, can be operably coupled to the inlet door 210 in other positions to pivot the inlet door 210 about the hinge 416 during operation.

In operation, the actuator 428 pivots the inlet door 210 about the hinge 416 to change the size of the inlet opening 224 and alter the flow of ram air to the inlet duct 209. The angle 418 between the first surface portion 412 and the second surface portion 414 is selected so that the ram air flow through the inlet opening 224 remains stable, or at least generally stable, throughout the flow regime as the inlet door 210 is modulated. When the inlet door 210 is in the position illustrated in Figure 4A (e.g., a 100% open position), the second surface portion 414 is aligned, or at least approximately aligned, with the fixed diffuser surface 430. As illustrated in Figure 4B, the actuator 428 can pivot the inlet door 210 in a first direction 451 about the hinge 416 to reduce the size of the inlet opening 224 and, accordingly, reduce the flow of ram air to the inlet duct 209. In this position, the third surface portion 426 of the inlet door 210 forms an aft facing surface or "air dam" that prevents high pressure air from the variable diffuser passage 432 from flowing back into the cavity between the inlet door 210 and the inlet housing 410. There is a relatively small (e.g., .05 inch to .10 inch) gap 427 (Figure 4A) between the third surface portion 426 and the fixed diffuser 431 that prevents the pressure in the cavity between the inlet housing 410 and the inlet door 210 from dropping too low, thereby reducing static loads on the door during operation.

Referring next to Figure 4C, the actuator 428 pivots the inlet door 210 in a second direction 452 about the hinge 416 to increase the inlet opening 224 and, accordingly, increase the flow of ram air to the inlet duct 209. With increasing mass flow rates, however, the pressure recovery performance of the inlet door 210 may decrease. For example, at high mass flow rates approaching the choke limits of the inlet opening 224, the performance of the inlet door 210 may be somewhat less than the performance of a conventional 2-piece inlet door because the 2-piece door has a larger throat area. In practice, however, most ram air inlets are designed with a substantial margin to inlet choking limits. As a result, the high mass flow rates where the recovery performance of the ram air inlet 201 drops off are often beyond the typical operating range. In addition, it may also be possible to delay the performance drop-off of the ram air inlet 201 to higher mass flow rates by increasing the throat area (i.e., the inlet opening 224) by approximately 10-15% beyond the point where the second surface portion 414 is aligned with the fixed diffuser 431. As shown in Figure 4C, this results in a forward facing step at the fixed diffuser interface. Test data suggests that the recovery performance of the ram air inlet 201 with the inlet door 210 in this position is improved beyond that of the 100% open position illustrated in Figure 4A when the ram air inlet 201 is operating at relatively high mass flow rates.

The present disclosure is not limited to the particular type of ram air inlet described above in reference to Figures 4A-4C. For example, various embodiments of the ram air ECS systems described herein can use other types of inlet doors. These doors can include 2-door modulated inlet configurations in which the forward and aft doors are connected by a hinge in the middle, such as those used on conventional commercial airplanes.

Figure 5A is a bottom isometric view of a modulated ram air outlet 202a configured in accordance with an embodiment of the disclosure, and Figure 5B is a bottom isometric view of a modulated ram air outlet 202b configured in accordance with another embodiment of the disclosure. Referring first to Figure 5A, the ram air outlet 202a includes an aft-facing scoop 530 that can pivot open and closed about a hinge line 531 to vary the outlet opening 225a. Referring next to Figure 5B, the modulated ram air outlet 202b can include a plurality of louvers 560 (identified individually as louvers 560a-c) which pivot about corresponding hinge lines 561 to open and close and thereby vary the outlet opening 225b. Regardless of which type of ram air outlet is used, the contour of the outlet opening and the modulation device can be selected to minimize or at least reduce exit losses and maximize or at least increase thrust recovery.

Although two types of ram air outlet are described above with reference to Figures 5A and 5B, those of ordinary skill in the art will appreciate that the present disclosure can utilize other types of modulated ram air outlets, such as those designed to provide efficient thrust recovery in accordance with the present disclosure. Accordingly, the present disclosure is not limited to the particular types of modulated ram air outlets described above.

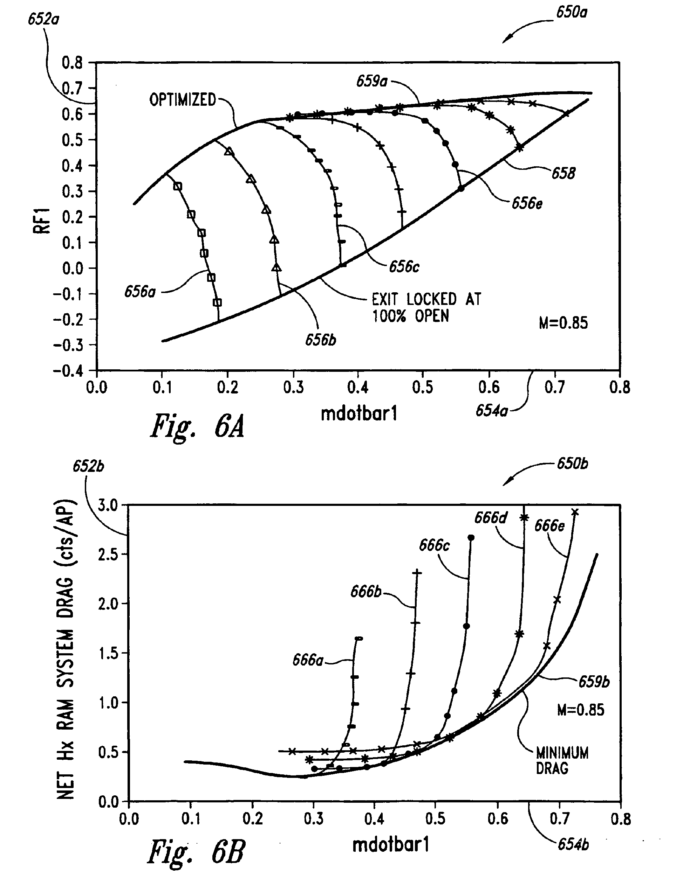

In one embodiment of the present disclosure, it is important to control the relationship between the inlet and exit areas of the ram air architecture 200 described above with reference to Figure 2, to maintain a relatively high pressure recovery in the inlet duct 209 over a wide range of mass flow rates. One process for determining the proper relationship between the inlet and exit areas is described below with reference to Figure 6A-8C. In general, this process involves using ram system data acquired from, e.g., flight test, wind tunnel test, or computational fluid dynamics simulation, to determine the inlet/exit relationship that provides optimum (or at least near-optimum) pressure recovery and minimized or at least reduced ram system drag over the range of possible mass flow rates.

Figure 6A illustrates a graph 650a of data (e.g., wind tunnel data) for a number of fixed ECS inlet positions and a number of outlet positions corresponding to each fixed inlet position. Pressure recovery factory RF1 is measured along a vertical axis 652a, and non-dimensional mass flow through the system is measured along a horizontal axis 654a. The graph 650a includes a plurality of curves 656 (identified individually as curves 656a-e) which represent a range of outlet positions for each fixed inlet position. For example, the first curve 656a illustrates RF1 as a function of mass flow for an inlet fixed at 10% open, while the outlet varies from a closed position up to 100% open. The second curve 656b illustrates the performance with the inlet fixed at 20% open, the third curve 656e represents the 30% open position, and so on. From the data in graph 650a, optimum inlet and outlet positions, as illustrated by a plot 659a, can be determined for each mass flow in the range. Implementation of these inlet/outlet positions can: maximize or at least increase RF1 at any mass flow; minimize or at least reduce the net ram system drag at any mass flow; and avoid or at least reduce Helmholtz resonance in the inlet duct 209 (Figure 2).

Figure 6B illustrates a graph 650b showing net ram system drag as a function of mass flow, for a series of fixed inlet positions and several corresponding outlet or exit positions. Net system drag is measured along a vertical axis 652b, and non-dimensional mass flow is measured along a horizontal axis 654b. The graph 650b includes a plurality of curves 666 (identified individually as curves 666a-e) which represent the net system drag as a function of mass flow for a plurality of fixed inlet positions as the outlet position varies. For example, the first curve 666a represents the net system drag as a function of mass flow for a fixed inlet position of 40% open and a range of corresponding exit positions. Similarly, the second curve 666b corresponds to a fixed inlet position of 50% open, the third curve 666c corresponds to a fixed inlet position of 60% open, and so on. The data illustrated in the graph 650b can be used to generate a plot 659b that represents the minimum net system drag achievable across the range of mass flow.

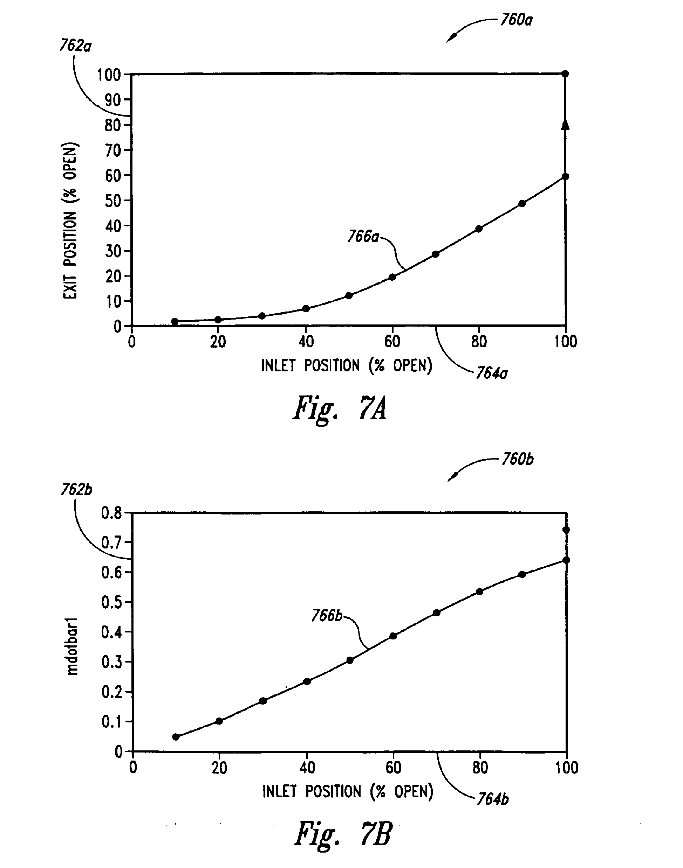

As the discussion above illustrates, the plot 659a in Figure 6A illustrates the relationship between the ram inlet position and the ram outlet position to achieve the optimum pressure recovery factor across the range of desired mass flows. The plot 659b shown in Figure 6B illustrates the inlet and outlet relationships that yield the lowest net system drag at each of the mass flows. Figure 7A illustrates a graph 760a in which the data from Figure 6A and 6B is combined to yield the optimum relationship between the inlet and outlet positions to produce the minimum net ram system drag while optimizing the pressure recovery factor. In Figure 7A, outlet or exit position (in % of exit open) is measured along a vertical axis 762a, and inlet position (in % of inlet open) is measured along a horizontal axis 764a. The plot 766a illustrates the relationship between the inlet and exit positions that yields the optimum, or near-optimum, pressure recovery factor and net system drag.

Figure 7B illustrates a graph 760b showing the mass flow obtained while maintaining the optimal relationship between the inlet and exit positions shown in Figure 7A. In Figure 7B, mass flow is measured along a vertical axis 762b, and inlet position (in % open) is measured along a horizontal axis 764b. A plot 766b represents the mass flow obtained while maintaining the optimum inlet and exit position relationship, as a function of inlet position. With the information provided in Figure 7A and 7B, optimum, or near-optimum, inlet/outlet positions can be selected for any desired mass flow.

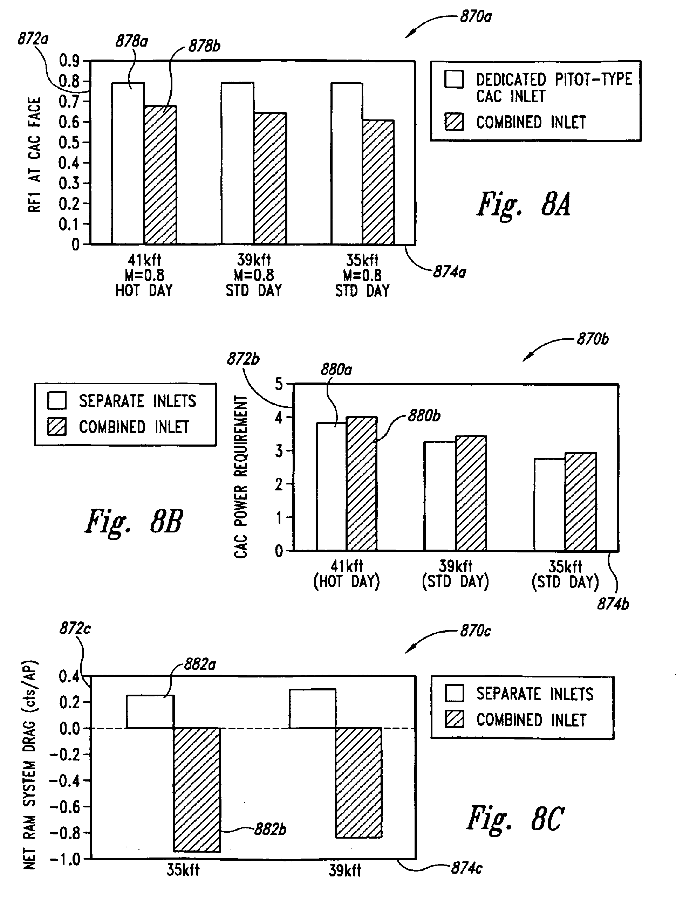

Figures 8A-8C compare the performance of an ECS ram system having a combined inlet, as shown in Figure 2, to an ECS ram system having a dedicated pitot-type cabin air compressor inlet, as shown in Figure 1. Referring first to Figure 8A, this Figure illustrates a bar graph 870a in which recovery factors RF1 are measured along a vertical axis 872a, and a number of different flight conditions are identified on a horizontal axis 874a. A first bar 878a represents the performance of a two inlet ECS (e.g., Figure 1) having a dedicated CAC inlet, and a second bar 878b represents the performance of a combined inlet ECS (e.g., Figure 2), at a given flight condition (e.g., 41,000 feet, Mach no. 0.8, hot day). As the data in bar graph 870a shows, the two inlet ECS having a dedicated pitot-type CAC inlet performs better than the combined inlet ECS at the three flight conditions shown.

Figure 8B illustrates a graph 870b that compares CAC power requirements for the combined inlet ECS to the CAC power requirements for two inlet ECS. CAC power requirements are measured along a vertical access 872b, and a number of different flight conditions are identified on a horizontal axis 874b. A first bar 880a represents the CAC power requirement for the two inlet ECS, and a second bar 880b represents the CAC power requirement for the combined inlet ECS. As this data illustrates, the combined inlet ECS requires more CAC power at each of the flight conditions shown.

Figure 8C illustrates a graph 870c that compares net ram system drag for the combined inlet ECS to the net ram system drag for the two inlet ECS, at two different flight conditions. Net ram system drag is measured along a vertical axis 872c, and the two flight conditions are identified on a horizontal axis 874c. A first bar 882a represents the net system drag associated with the 2 inlet ECS, and a second bar 882b represent the drag associated with the combined inlet ECS. As the graph 870c illustrates, the combined inlet ECS architecture causes less ram system drag on the aircraft at each of the two flight conditions shown.

The data presented in Figures 8A-8C illustrate that while the combined inlet ECS architecture may result in higher CAC power requirements and slightly lower air pressure recovery in the inlet duct, the benefits gained in aerodynamic drag reduction outweigh these effects. By way of example, in one embodiment, the fuel burn penalty associated with the increased CAC power requirements results in a 0.05% reduction in fuel efficiency, but the corresponding reduction in drag from combining the two ram air inlet results in a 0.4% increase in fuel efficiency. Thus, the net fuel burn savings resulting from implementation of a combined inlet ECS architecture can equate to about a 0.35% increase in fuel efficiency. Moreover, there may be additional benefits in terms of reduced aircraft system weight from elimination of two CAC inlets and two actuated foreign object debris (FOD) door assemblies, as well as reduced recurring costs associated with manufacture and maintenance. Elimination of pitot-type CAC inlets can also eliminate the corresponding anti-icing heaters which may be required for operation of those inlets under icing conditions.

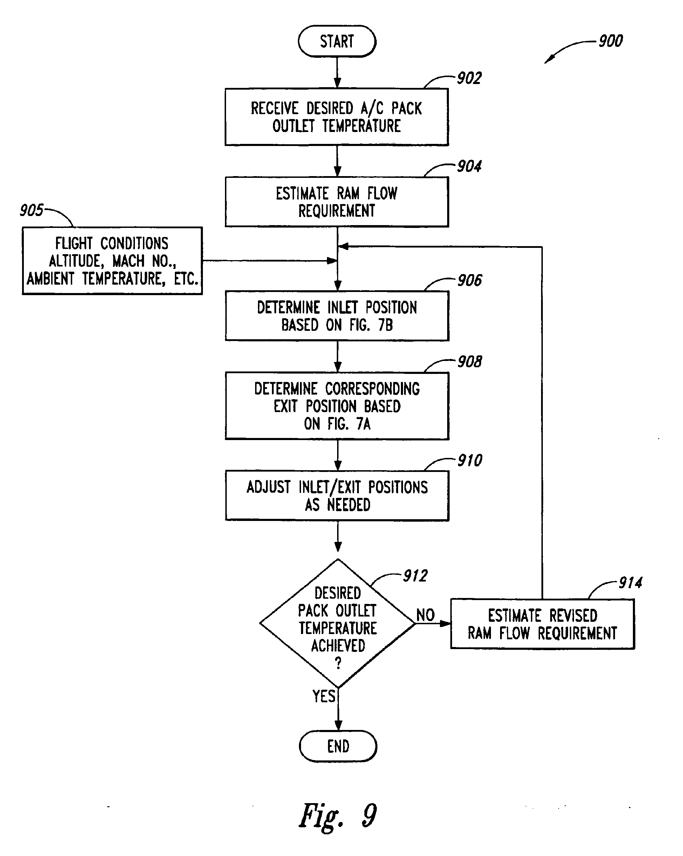

Figure 9 is a flow diagram illustrating a routine for modulating a ram air inlet and/or an associated ram air outlet in accordance with an embodiment of the disclosure. In one aspect of this embodiment, the routine 900 can be implemented by the controller 220 in the ECS architecture 200 described above with reference to Figure 2. In block 902, the routine receives a desired air conditioning pack outlet temperature. In block 904, the routine estimates a ram air flow requirement. The ram flow requirement can depend on altitude, Mach number, ambient temperature, and/or other flight conditions, as shown in block 905. In block 906, the routine determines an inlet position based on Figure 7B discussed above. In block 908, the routine determines a corresponding exit position based on Figure 7A discussed above. In block 910, the routine adjusts the inlet/exit positions in accordance with blocks 906 and 908. In decision block 912, the routine determines if the desired air conditioning pack outlet temperature has been achieved. If so, the routine ends. If not, the routine proceeds to block 914 and estimates a revised ram flow requirement. After block 914, the routine returns to block 906 and repeats.

The routine described above with reference to Figure 9 for modulating a ram air inlet and/or an associated ram air outlet can be implemented with various types of ECS architectures, including the ECS architecture 100 described above with reference to Figure 1 and the ECS architecture 200 described above with reference to Figure 2. In the embodiment of Figure 1, for example, a first portion of ram air can be received from a dedicated cabin air inlet, compressed with an electric motor-driven compressor, conditioned in an air conditioning pack, and then cooled in a heat exchanger before flowing into the cabin. A second portion of ram air can be received from a modulated ram air inlet, supplied to the heat exchanger to cool the first portion of ram air, and then discharged overboard through a modulated ram air outlet. In this embodiment, the ECS architecture can further include a controller operably coupled to the ram air inlet and the ram air outlet. The controller can automatically modulate the variable inlet opening of the ram air inlet in conjunction with the variable outlet opening of the ram air outlet during operation of the aircraft to reduce the aerodynamic drag associated with the ECS ram system.

In a similar embodiment, the first portion of air can be received from an engine bleed system, instead of the dedicated cabin air inlet. The first portion of air is then conditioned in the air conditioning pack and cooled in the heat exchanger before flowing into the cabin. In this embodiment, the second portion of ram air can be received from a modulated ram air inlet as described above, and supplied to the heat exchanger to cool the first portion of ram air. The second portion of air is then discharged overboard through a modulated ram air outlet. The controller can automatically modulate the variable inlet opening of the ram air inlet in conjunction with the variable outlet opening of the ram air outlet during operation of the aircraft to reduce the aerodynamic drag associated with the ECS ram system.

Although not required, portions of the routine 900 can be embodied in computer-executable instructions, such as instructions executed by a computer, e.g., the controller 220 of Figure 2. Those skilled in the relevant art will appreciate that the invention can be practiced with other computer system configurations, including multiprocessor systems, microprocessor-based or programmable electronics, minicomputers, mainframe computers and the like. The routine can be performed by a special purpose computer or data processor that is specifically programmed, configured or constructed to perform the routine. Indeed, the term "computer", as used generally herein, refers to any of the above devices, as well as any data processor. Furthermore, the computer-readable instructions can be stored or distributed on computer-readable media, including magnetic and optically readable and removable computer discs, stored as firmware in chips (*e.g*., EEPROM chips), as well as distributed electronically over the Internet or over other networks (including wireless networks). Data structures and transmission of data particular to aspects of the invention are also encompassed within the scope of the present disclosure.

From the foregoing, it will be appreciated that specific embodiments of the disclosure have been described herein for purposes of illustration, but that various modifications may be made without deviating from the scope of the claims. Although aspects of the disclosure have been described above in the context of ram air inlets for use with aircraft ECSs, in other examples not claimed, ram air inlets configured and/or controlled in accordance with aspects of the present disclosure can be used to provide air to other types of aircraft systems, such as aircraft propulsion, auxiliary power, and/or cooling systems.

## Claims

1. An environmental control system -ECS (200)- for use with an aircraft (300), the ECS (200) comprising:
a ram air inlet (201) in flow communication with a ram air inlet duct (209) for receiving a flow of outside air;
a ram air outlet (202) in flow communication with the ram air inlet duct (209); and
a controller (220) operably coupled to the ram air outlet (202) and the ram air inlet (201), wherein the ram air inlet (201) includes a variable inlet opening (224) and the ram air outlet includes a variable outlet opening (225), and wherein the controller modulates the variable inlet opening (224) and the variable outlet opening (225) during operation of the ECS (200) to increase the air pressure in the inlet duct (209) and thereby reduce aerodynamic drag.

2. The ECS of claim 1 wherein the ram air inlet (201) is a flush inlets.

3. The ECS of claim 1, further comprising:
means for dividing the flow of outside air into a first air flow portion and a second air flow portion;
means for cooling the first air flow portion with the second air portion before providing the first air flow portion to a cabin of the aircraft (300).

4. The ECS of claim 3, wherein the means for cooling comprises an air conditioning pack (206) having an associated heat exchanger (208), wherein:
the air conditioning pack (206) receives the first air flow portion;
the heat exchanger (208) receives the second air flow portion;
the first air flow portion flows from the air conditioning pack (206) and through the heat exchanger (208) before flowing into a cabin of the aircraft (300); and
the second air flow portion cools the first air flow portion in the heat exchanger (208).

5. The ECS of claim 4, wherein the ram air outlet (225) exhausts the second air flow portion away from the aircraft (300) after the second air flow portion passes through the heat exchanger (208).

6. The ECS of claim 3, further comprising means for compressing the first air flow portion before cooling the first air flow portion with the second air flow portion.

7. The ECS of claim 6, further comprising:
an air passage (212a) in flow communication with the ram air inlet duct (209); and
wherein the means for compressing comprises a cabin air compressor (204a) operably coupled to the air passage (212a), and the first air flow portion flows through the air passage (212a) to the cabin air compressor (204a) before flowing through the means for cooling which comprises an air conditioning pack (206).

8. A method of operating an environmental control system -ECS (200)- on an aircraft (300) in flight, the method comprising:
receiving a flow of outside air in a ram air inlet duct (209);
modulating a ram air inlet opening (224) in flow communication with the ram air inlet duct (209); and
modulating a ram air outlet opening (225) in flow communication with the ram air inlet duct (209), wherein the ram air inlet opening (224) and the ram air outlet opening (225) are modulated to increase the air pressure in the inlet duct (209) and thereby reduce the aerodynamic drag caused by the ECS (200).

9. The method of claim 8, further comprising:
separating the flow of outside air in the ram air inlet duct (209) into a first air flow portion and a second air flow portion;
compressing the first air flow portion;
after compressing the first air flow portion, cooling the first air flow portion with the second air flow portion; and
after cooling the first air flow portion with the second air flow portion, directing the first air flow portion into a cabin of the aircraft (300) and the second air flow portion out of the aircraft (300) via the ram air outlet opening (225).

## Patentansprüche

1. Regelsystem für Umgebungsbedingungen - ECS (Environmental Control System)(200) - zur Verwendung mit einem Flugzeug (300), wobei das ECS (200) Folgendes umfasst:
einen Staudruckluft-Einlass (201) in Strömungsverbindung mit einer Staudruckluft-Einlassleitung (209) zum Aufnehmen eines Stromes von Außenluft;
einen Staudruckluft-Auslass (202) in Strömungsverbindung mit der Staudruckluft-Einlassleitung (209); und
ein Steuergerät (220), das operativ mit dem Staudruckluft-Auslass (202) und den Staudruckluft-Einlass (201) verbunden ist, wobei der Staudruckluft-Einlass (201) eine veränderliche Einlassöffnung (224) enthält und der Staudruckluft-Auslass eine veränderliche Auslassöffnung (225) enthält und wobei das Steuergerät die veränderliche Einlassöffnung (224) und die veränderliche Auslassöffnung (225) während des Betriebs des ECS (200) reguliert, um den Luftdruck in der Einlassleitung (209) zu erhöhen und **dadurch** den aerodynamischen Luftwiderstand zu verringern.

2. ECS nach Anspruch 1, wobei der Staudruckluft-Einlass (201) ein bündiger Einlass ist.

3. ECS nach Anspruch 1, das ferner Folgendes aufweist:
Mittel zum Teilen des Stroms von Außenluft in einen ersten Luftstromanteil und einen zweiten Luftstromanteil;
Mittel zum Kühlen des ersten Luftstromanteils mit dem zweiten Luftstromanteil, bevor der erste Luftstromanteil einer Kabine des Flugzeuges (300) zugeführt wird.

4. ECS nach Anspruch 3, wobei die Mittel zum Kühlen eine Klimaanlageneinheit (206) aufweisen, die einen zugeordneten Wärmetauscher (208) hat, wobei:
die Klimaanlageneinheit (206) den ersten Luftstromanteil aufnimmt;
der Wärmetauscher (208) den zweiten Luftstromanteil aufnimmt;
der erste Luftstromanteil aus der Klimaanlageneinheit (206) und durch den Wärmetauscher (208) strömt, bevor er in eine Kabine des Flugzeugs (300) strömt; und
der zweite Luftstromanteil den ersten Luftstromanteil im Wärmetauscher (208) kühlt.

5. ECS nach Anspruch 4, wobei der Staudruckluft-Auslass (225) den zweiten Luftstromanteil vom Flugzeug (300) weg ausstößt, nachdem der zweite Luftstromanteil durch den Wärmetauscher (208) hindurchgeht.

6. ECS nach Anspruch 3, das ferner Mittel aufweist, um den ersten Luftstromanteil zu verdichten, bevor der erste Luftstromanteil mit dem zweiten Luftstromanteil gekühlt wird.

7. ECS nach Anspruch 6, das ferner Folgendes aufweist:
einen Luftdurchgang (212a) in Strömungsverbindung mit der Staudruckluft-Einlassleitung (209); und
wobei die Mittel zum Verdichten einen Kabinenluft-Verdichter (204a) umfassen, der operativ mit dem Luftdurchgang (212a) verbunden ist, und der erste Luftstromanteil durch den Luftdurchgang (212a) zum Kabinenluft-Verdichter (204a) strömt, bevor er durch die Mittel zum Kühlen strömt, die eine Klimaanlageneinheit (206) umfassen.

8. Verfahren zum Betreiben eines Regelsystems für Umgebungsbedingungen - ECS (200) - in einem Flugzeug (300) im Flug, wobei das Verfahren Folgendes umfasst:
das Aufnehmen eines Stroms von Außenluft in einer Staudruckluft-Einlassleitung (209);
das Regulieren einer Staudruckluft-Einlassöffnung (224) in Strömungsverbindung mit der Staudruckluft-Einlassleitung (209); und
das Regulieren einer Staudruckluft-Auslassöffnung (225) in Strömungsverbindung mit der Staudruckluft-Einlassleitung (209), wobei die Staudruckluft-Einlassöffnung (224) und -Auslassöffnung (225) reguliert werden, um den Luftdruck in der Einlassleitung (209) zu erhöhen und **dadurch** den durch das ECS (200) verursachten aerodynamischen Luftwiderstand zu verringern.

9. Verfahren nach Anspruch 8, das ferner Folgendes umfasst:
das Teilen des Stroms von Außenluft in der Staudruckluft-Einlassleitung (209) in einen ersten Luftstromanteil und einen zweiten Luftstromanteil;
das Verdichten des ersten Luftstromanteils;
nach dem Verdichten des ersten Luftstromanteils das Kühlen des ersten Luftstromanteils mit dem zweiten Luftstromanteil; und
nach dem Kühlen des ersten Luftstromanteils mit dem zweiten Luftstromanteil das Leiten des ersten Luftstromanteils in eine Kabine des Flugzeugs (300) und des zweiten Luftstromanteils aus dem Flugzeug (300) über die Staudruckluft-Auslassöffnung (225).

## Revendications

1. Système de régulation d'ambiance - ECS (200) - destiné à être utilisé avec un aéronef (300), le système ECS (200) comprenant :
une entrée d'air dynamique (201) en communication de flux avec un conduit d'entrée d'air dynamique (209) pour recevoir un flux d'air extérieur ;
une sortie d'air dynamique (202) en communication de flux avec le conduit d'entrée d'air dynamique (209) ; et
un dispositif de commande (220) couplé de manière fonctionnelle à la sortie d'air dynamique (202) et à l'entrée d'air dynamique (201), dans lequel l'entrée d'air dynamique (201) comprend une ouverture d'entrée variable (224) et la sortie d'air dynamique comprend une ouverture de sortie variable (225), et dans lequel le dispositif de commande module l'ouverture d'entrée variable (224) et l'ouverture de sortie variable (225) pendant l'utilisation du système ECS (200) pour augmenter la pression de l'air dans le conduit d'entrée (209) et réduire de ce fait la traînée aérodynamique.

2. Système ECS selon la revendication 1, dans lequel l'entrée d'air dynamique (201) est une entrée affleurante.

3. Système ECS selon la revendication 1, comprenant en outre :
des moyens pour diviser le flux d'air extérieur en une première partie de flux d'air et une deuxième partie de flux d'air ;
des moyens pour refroidir la première partie de flux d'air avec la deuxième partie d'air avant de fournir la première partie de flux d'air à une cabine de l'aéronef (300).

4. Système ECS selon la revendication 3, dans lequel le moyen pour refroidir comprend un groupe de conditionnement d'air (206) comportant un échangeur thermique (208) associé, dans lequel :
le groupe de conditionnement d'air (206) reçoit la première partie de flux d'air ;
l'échangeur thermique (208) reçoit la deuxième partie de flux d'air ;
la première partie de flux d'air s'écoule à partir du groupe de conditionnement d'air (206) et à travers l'échangeur thermique (208) avant de s'écouler dans une cabine de l'aéronef (300) ; et
la deuxième partie de flux d'air refroidit la première partie de flux d'air dans l'échangeur thermique (208).

5. Système ECS selon la revendication 4, dans lequel la sortie d'air dynamique (225) évacue la deuxième partie de flux d'air de l'aéronef (300) après que la deuxième partie de flux d'air passe à travers l'échangeur thermique (208).

6. Système ECS selon la revendication 3, comprenant en outre des moyens pour comprimer la première partie de flux d'air avant refroidissement de la première partie de flux d'air avec la deuxième partie de flux d'air.

7. Système ECS selon la revendication 6, comprenant en outre :
un passage d'air (212a) en communication de flux avec le conduit d'entrée d'air dynamique (209) ; et
dans lequel le moyen pour comprimer comprend un compresseur d'air de cabine (204a) couplé de manière fonctionnelle au passage d'air (212a), et la première partie de flux d'air s'écoule à travers le passage d'air (212a) vers le compresseur d'air de cabine (204a) avant de s'écouler à travers le moyen pour refroidir qui comprend un groupe de conditionnement d'air (206).

8. Procédé d'exploitation d'un système de régulation d'ambiance - ECS (200) - sur un aéronef (300) en vol, le procédé comprenant :
la réception d'un flux d'air extérieur dans un conduit d'entrée d'air dynamique (209) ;
la modulation d'une ouverture d'entrée d'air dynamique (224) en communication de flux avec le conduit d'entrée d'air dynamique (209) ; et
la modulation d'une ouverture de sortie d'air dynamique (225) en communication de flux avec le conduit d'entrée d'air dynamique (209), dans lequel l'ouverture d'entrée d'air dynamique (224) et l'ouverture de sortie d'air dynamique (225) sont modulées pour augmenter la pression de l'air dans le conduit d'entrée (209) et réduire de ce fait la traînée aérodynamique provoquée par le système ECS (200).

9. Procédé selon la revendication 8, comprenant en outre :
la séparation du flux d'air extérieur dans le conduit d'entrée d'air dynamique (209) en une première partie de flux d'air et une deuxième partie de flux d'air ;
la compression de la première partie de flux d'air ;
après compression de la première partie de flux d'air, le refroidissement de la première partie de flux d'air avec la deuxième partie de flux d'air ; et
après refroidissement de la première partie de flux d'air avec la deuxième partie de flux d'air, diriger la première partie de flux d'air dans une cabine de l'aéronef (300) et la deuxième partie de flux d'air hors de l'aéronef (300) via l'ouverture de sortie d'air dynamique (225).
